# EUROPEAN PATENT APPLICATION

(11) **EP 2 088 529 A2**
(43) Date of publication of application: **12.08.2009**
(21) Application number: 09151473.7
(22) Date of filing: 27.01.2009
(51) Int. Cl.: G06F 21/00

(54) **System and method for securing and executing a flash routine**

(30) Priority: 04.02.2008 US 25671
(71) Applicant: Honeywell International Inc., Morristown, NJ 07962 (US)
(72) Inventor: Ramegowda, Yogesha Aralakuppe, Morristown, NJ 07962-2245 (US); Dangeti, Srinivasa R., Morristown, NJ 07962-2245 (US); Chopra, Puja, Morristown, NJ 07962-2245 (US); Pesala, Narasimha Rao, Morristown, NJ 07962-2245 (US); Gautam, Puri, Morristown, NJ 07962-2245 (US); Kop, Shruti, Morristown, NJ 07962-2245 (US); Raj, Darshan, Morristown, NJ 07962-2245 (US); Sivaraman, Mani, Morristown, NJ 07962-2245 (US); Puppala, Yugandhar Kumar, Morristown, NJ 07962-2245 (US); Muthusamy, Kaarthikeyan, Morristown, NJ 07962-2245 (US); Jethe, Sachin, Morristown, NJ 07962-2245 (US); Suresh, Mugdalbetta Rajesh, Morristown, NJ 07962-2245 (US)
(74) Representative: Buckley, Guy Julian

(57) **Abstract**

A microcontroller comprises a random access memory (RAM) device; a non-volalile memory device having a data sector, wherein encrypted operation codes are stored as data files in the data sector; and a processor configured to retrieve the encrypted operation codes from the data sector, load the retrieved operation codes into the RAM device, decrypt the encrypted operation codes and run the decrypted operation codes from the RAM device.

## Description

### BACKGROUND

Microcontrollers in an embedded system typically include a central processing unit (CPU), memory (such as EEPROM or flash memory), interfaces, and other peripherals integrated onto a single integrated circuit. Hence, the number of chips, wires, and space needed is reduced compared to using separate chips. In addition, unlike general purpose microprocessors, microcontrollers are typically designed to carry out specific functions, which increases their cost-effectiveness.

However, microcontrollers are vulnerable to data corruption such as corruption due to code run-away. Code run-away can be caused by faulty code, operating the Micro-Controller Unit (MCU) outside its specification or by a major electromagnetic interference (EMI) or electrical noise event. By definition, it is not well defined what will happen during code run-away, but it is caused by the out-of-specification operating environment effectively corrupting the program counter resulting in the MCU behaving unpredictably. A corrupted program counter could lead to a jump to programming code that performs the flash erase or write operation, resulting in accidental corruption of flash memory data that contains application code.

For the reasons stated above, and for other reasons stated below which will become apparent to those skilled in the art upon reading and understanding the present specification, there is a need in the art for a system and method for securing and executing a flash routine.

### SUMMARY

The above mentioned problems and other problems are resolved by the present invention and will be understood by reading and studying the following specification.

In one embodiment, a microcontroller is provided. The microcontroller comprises a random access memory (RAM) device; a non-volatile memory device having a data sector, wherein operation codes are stored as data files in the data sector; and a processor configured to retrieve the operation codes from the data sector, load the retrieved operation codes into the RAM device and run the decrypted operation codes from the RAM device.

### DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:
Figure 1 is a block diagram of a non-volatile memory device according to one embodiment of the present invention.
Figure 2 is a block diagram of a microcontroller according to one embodiment of the present invention.
Figure 3 is a flow chart depicting a method of preventing corruption of operation codes in a non-volatile memory device according to one embodiment of the present invention.
Figure 4 is a flow chart depicting a method of implementing a non-volatile memory device.

In accordance with common practice, the various described features are not drawn to scale but are drawn to emphasize specific features relevant to the present invention. Like reference numbers and designations in the various drawings indicate like elements.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical, and electrical changes may be made without departing from the scope of the present invention. Furthermore, the method presented in the drawing figures or the specification is not to be construed as limiting the order in which the individual steps may be performed. The following detailed description is, therefore, not to be taken in a limiting sense.

Embodiments of the present invention prevent the accidental execution of operation codes, such as *write* and *erase,* due to code runaway through a unique manner of storing the operation codes as data files and executing the operation codes from RAM rather than the non-volatile memory device itself. In addition, embodiments of the present invention, prevent the execution of corrupted operation codes by detecting corruptions during a decryption process prior to execution. Embodiments of the present invention further protect the non-volatile memory device by locking the boot loader code which prevents accidental changes to the boot loader code.

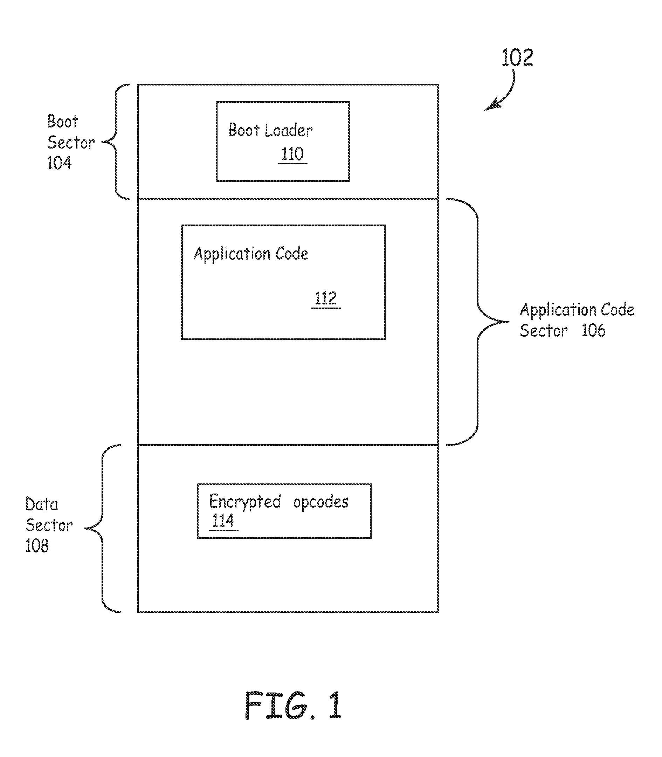

Figure 1 is a block diagram of a non-volatile memory device 102 according to one embodiment of the present invention. In this exemplary embodiment, non-volatile memory device 102 is implemented as a flash memory device. However, it is to be understood that other types of non-volatile memory devices, such as an EEPROM, may be used in other embodiments. Device 102 comprises a boot sector 104, an application code sector 106, and a data sector 108 (also referred to as constant data segment). A boot sector is defined, as used herein, as a section of memory device 102 used for storing a boot loader code. A boot loader code is a program that performs activities such as power up initializations when activated at power up. Hence, boot sector 104 contains boot loader code 110. Similarly, an application code sector 106 is defined, as used herein, as a section of memory device 102 used for storing an application code or program 112. Application code is a program which directly applies the capabilities of a microcontroller to perform a specific task. Finally, memory device 102 comprises a data sector 108. A data sector is defined as a section of the device 102 used for storing non-executable data.

Memory device 102 also has operation codes 114 (also referred to as opcodes) stored thereon. Operation codes are instructions which specify a particular task to be performed by a processor. For example, standard opcodes for a non-volatile memory device include *read, write,* and *erase.* In conventional memory devices, operation codes are stored in and executable from the application code sector. In embodiments of the present invention, however, opcodes 114 are stored as data files in data sector 108 as shown in Fig. 1. Hence, opcodes 114 are not executable directly from memory device 102.

In addition, in some embodiments, opcodes 114 are encrypted. In particular, in one embodiment the opcodes 114 are encrypted by shifting the values of the opcodes through a circular shift or bit rotation. In another embodiment, opcodes 114 are encrypted by inserting constant values into opcodes 114 at predefined locations. Similarly, in another embodiment, opcodes 114 are encrypted using an XOR cipher which applies a key to the opcodes 114. Notably, embodiments of the present invention can utilize any type of encryption algorithm and are not limited to the exemplary algorithms stated herein.

Storage of opcodes 114 as data in data sector 108 and encryption of opcodes 114 prevents accidental execution of opcodes 114. For example, in conventional non-volatile memory devices, a corrupted program counter could lead to a jump to opcodes 114 which perform the erase or write operation thereby corrupting data in the conventional non-volatile memory device. In embodiments of the present invention, however, an improper jump to opcodes 114 will not cause execution of opcodes 114 because opcodes 114 are stored as data rather than application code. In addition, opcodes 114 are encrypted in some embodiments. In such embodiments, opcodes 114 must first be decrypted before being executed. Hence, any improper attempt to execute opcodes 114 will be detected and prevented. In addition, corruption of any of opcodes 114 is also detected during the decryption process, thereby preventing execution of a corrupted opcode.

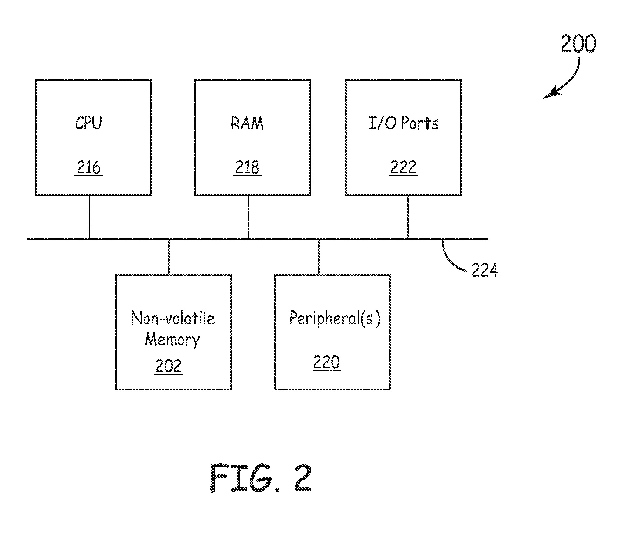

Figure 2 is a block diagram of a microcontroller 200 according to one embodiment of the present invention. Microcontroller 200 is integrated onto a single chip and comprises a non-volatile memory device 202, a random access memory (RAM) device 218, a processor 216, and input/output ports 222. Microcontroller 200 may also contain other peripherals 220, such as a timer module, analog-to-digital converter, etc. as known to one of skill in the art. Input/output ports 222 provide signals from/to other devices to/from microcontroller 200, such as user input devices, sensors, etc. Processor 216 communicates with other components over bus 224 and processes signals received over input/output ports 222. In processing signals, processor 216 uses RAM 218 to store dynamic data used by processor 216, such as data received from input/output ports 222.

Processor 216 retrieves instructions, such as application code 112 and opcodes 114, from non-volatile memory device 202 for execution by processor 216. In particular, when processor 216 receives a valid command to manipulate data on non-volatile memory device 202, processor 216 retrieves the corresponding opcode from non-volatile memory device 202. As described above with respect to Figure 1, opcodes are stored as data in a data sector of non-volatile memory device 202 rather than in an application code sector. In addition, in this embodiment, the opcodes are encrypted. Therefore, processor 216 retrieves the encrypted opcodes from the data sector of non-volatile memory device and decrypts the opcodes.

Processor 216 then runs the decrypted opcodes from RAM device 218 rather than directly from non-volatile memory device 202. If an opcode is corrupted, due to electromagnetic interference (EMI) for example, processor 216 detects the corruption while decrypting the opcode and does not execute the opcode. Furthermore, accidental invoking of the opcodes due to code runaway is also prevented since the opcodes are encrypted and stored as data. Only valid commands verified by processor 216 are allowed to cause execution of the opcodes. Thus, data corruption due to code runaway is prevented by microcontroller 200.

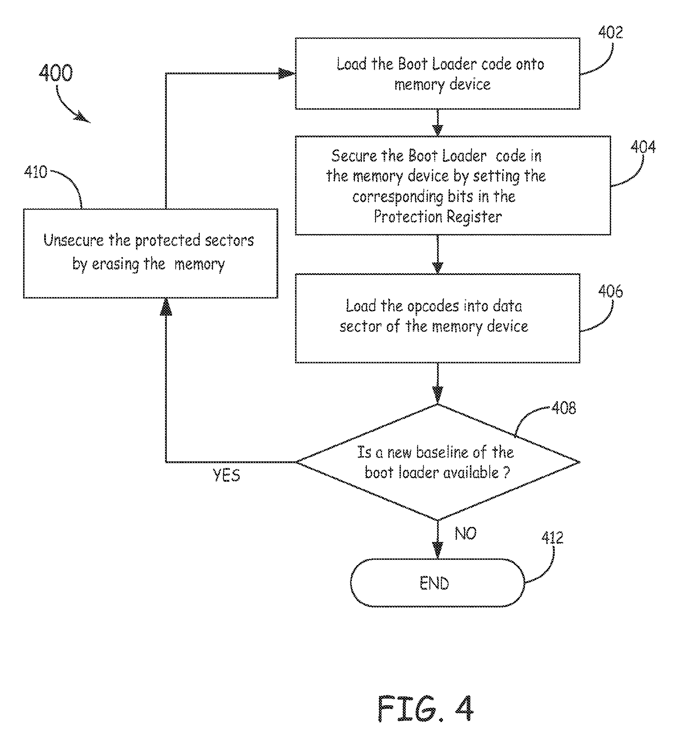

Instructions for causing processor 216 to retrieve, decrypt and execute the opcodes stored in the data sector of non-volatile memory device 202 are typically tangibly embodied on any appropriate medium used for storage of computer readable instructions or data structures. Notably, the instructions are specific to the processor 216 used in a given implementation and to other environment factors. Computer readable media can be any available media that can be accessed by a general purpose or special purpose computer or processor, or any programmable logic device. Suitable computer readable media may include storage media or memory media such as magnetic or optical media, e.g., disk or CD-ROM, volatile or non-volatile media such as RAM (e.g. SDRAM, DDR SDRAM, RDRAM, SRAM, etc.), ROM, EEPROM, flash memory, etc. as well as transmission media or signals such as electrical, electromagnetic, or digital signals, conveyed via a communication medium such as network and/or a wireless link. For example, in this embodiment, the instructions are stored on non-volatile memory device 202. In particular, in some embodiments, the boot loader code stored in non-volatile memory device 202 is configured to cause processor 216 to load the opcodes from the data sector into RAM device 218 for execution. Figure 4 discusses a method to secure the boot loader code in some embodiments to prevent corruption of the boot loader code.

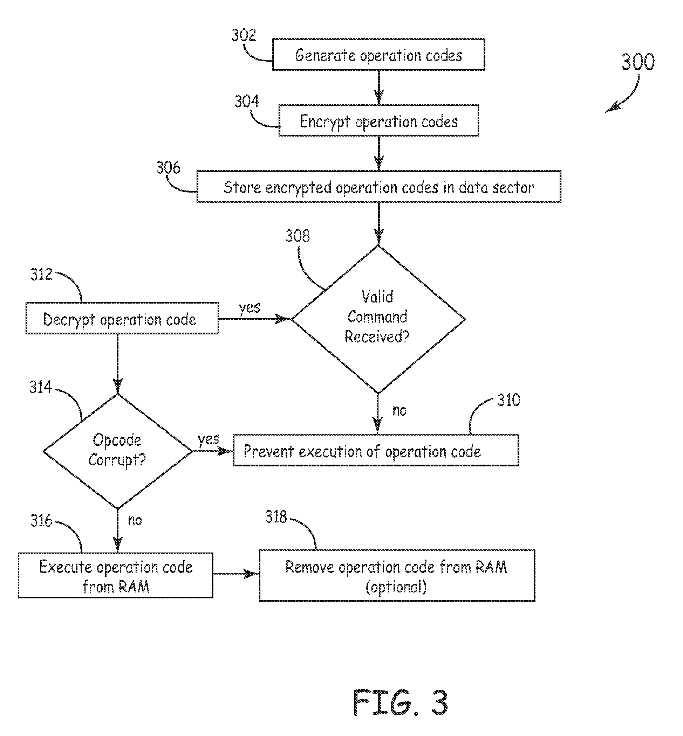

Figure 3 is a flow chart depicting a method 300 of preventing corruption of operation codes in a non-volatile memory device according to one embodiment of the present invention. Method 300 is implemented using a system such as microcontroller 200 discussed above. At 302, opcodes are generated using a processor specific tool as known to one of skill in the art. At 304, the generated opcodes are encrypted. In one embodiment, the opcodes are encrypted using a circular shift algorithm. In other embodiments, the opcodes are encrypted by inserting constant values into the opcodes.

At 306, the encrypted opcodes are stored as data files in the data sector of a non-volatile memory device, such as non-volatile memory device 102 discussed above. In particular, in this embodiment, the non-volatile memory device is a flash memory device. At 308, it is determined if a valid command has been received to execute the opcodes stored in the non-volatile memory device. A command is determined to be valid based, for example, on the source and timing of the command. If a received command is invalid, the processor, such as processor 216, prevents the opcodes from being executed at 310. If the received command is valid, the opcode(s) corresponding to the command are decrypted at 312 using an algorithm corresponding to the encryption algorithm used at 304.

At 314, it is determined if the decrypted opcodes(s) have been corrupted, due to EMI for example. In particular, it is determined if the decrypted opcodes(s) have been corrupted by use of a simple parity check or other error correction algorithm such as a cyclic redundancy check (CRC). If the decrypted opcode(s) is corrupted, the processor prevents the opcodes from being executed at 310. If the decrypted opcodes(s) is not corrupted, the processor executes the requested opcode(s) at 316. In particular, in some embodiments, the processor executes the opcodes(s) from a RAM device, such as RAM device 218 above. In some such embodiments, the processor optionally removes the opcode(s) from the RAM device after execution of the opcode(s) at 318. In other embodiments, the opcodes(s) are kept in the RAM device for quick location and operation at a future moment. Hence, method 300 described above, prevents accidental execution of opcodes as well as detects and prevents execution of corrupted opcodes.

Figure 4 is a flow chart depicting a method of implementing a non-volatile memory device, such as device 102, to prevent data corruption according to one embodiment of the present invention. At 402, boot loader code is loaded onto boot sector of the non-volatile memory device. In particular, the boot loader code is loaded as part of the manufacturing process. At 404, the boot loader code is secured by setting bits in the protection register which correspond to the boot loader code. For example, in one embodiment, the protection register bits are set by an external system which loads the boot loader code onto the non-volatile memory device. In another embodiment, the boot loader code is configured to set the bits when executed.

At 406, generated opcodes are stored in the data sector of the non-volatile memory device as described above. In particular, in some embodiments, the generated opcodes are encrypted and stored in the data sector. At 408, it is periodically determined if a new baseline or released version of the boot loader code is available. If a new version is available, the boot loader code is unsecured, at 410, by erasing the memory using one of a Background Debug Module (BDM), JTAG or chip erase commands. Method 400 then returns to 402 where the new version of the boot loader code is loaded onto the boot sector of the non-volatile memory device. If a new version of the boot loader code is not available at 408, method 400 ends at 412.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method (300) of preventing corruption of operation codes in a non-volatile memory device, the method comprising:
generating the operation codes (302);
encrypting the generated operation codes (304); and
storing the encrypted operation codes as data files in a data sector of the non-volatile memory device (306).

2. The method of claim 1, wherein encrypting the generated operation codes comprises encrypting the generated operation codes using a circular shift algorithm (304).

3. The method of claim 1, wherein encrypting the generated operation codes comprises encrypting the generated operation codes by inserting one or more constant values into the operation codes (304).

4. The method of claim 1, wherein storing the encrypted operation codes in the data sector of the non-volatile memory device comprises storing the encrypted operation codes in the data sector of a flash memory device (306).

5. The method of claim 1, further comprising:
decrypting the encrypted operation codes (312); and
executing the decrypted operation codes (316).

6. The method of claim 5, wherein decrypting the encrypted operation codes comprises decrypting the operation codes upon receipt of a valid command (310).

7. The method of claim 5, wherein executing the decrypted operation codes comprises:
executing the decrypted operation codes from a random access memory (RAM) device (316).

8. The method of claim 7 further comprising:
removing the decrypted operation codes from the RAM device after execution of the operation codes (318).
